Europäisches Patentamt

European Patent Office

Office européen des brevets

(19)

(11) Veröffentlichungsnummer : **0 063 260**
**B1**

(12)                    **EUROPÄISCHE PATENTSCHRIFT**

(45) Veröffentlichungstag der Patentschrift :
**02.01.86**

(51) Int. Cl.⁴ : **F 16 L   9/14**

(21) Anmeldenummer : **82102585.5**

(22) Anmeldetag : **27.03.82**

(54) **Betonrohr mit einer inneren Auskleidung.**

(30) Priorität : **07.04.81 DE 3114003**

(43) Veröffentlichungstag der Anmeldung :
**27.10.82 Patentblatt 82/43**

(45) Bekanntmachung des Hinweises auf die Patenterteilung : **02.01.86 Patentblatt 86/01**

(84) Benannte Vertragsstaaten :
**DE FR GB IT**

(56) Entgegenhaltungen :
**BE-A-   670 684**
**CH-A-   516 995**
**DE-A- 2 417 974**
**DE-A- 2 432 648**
**DE-A- 2 705 850**
**DE-A- 2 851 399**
**US-A- 3 451 884**

(73) Patentinhaber : **Schlegel Lining Technology GmbH**
**Bredowstrasse 33**
**D-2000 Hamburg 74 (DE)**

(72) Erfinder : **Hammer, Heiner I.**
**Moorweide 1**
**D-2105 Seevetal/Hittfeld (DE)**

(74) Vertreter : **Glawe, Delfs, Moll & Partner Patentan-**
**wälte**
**Postfach 26 01 62 Liebherrstrasse 20**
**D-8000 München 26 (DE)**

## Beschreibung

Die Erfindung bezieht sich auf ein Betonrohr mit einer von einer Kunststoffolie gebildeten, inneren Auskleidung, die mittels bürstenartig dicht angeordneter Vorsprünge im Beton verankert ist, die von Monofilatmenten gebildet sind, die in dichter Anordnung gehalten sind in Gewebestreifen, welche ihrerseits mit der Folie verbunden sind.

Es ist bekannt, Betonrohre vor dem schädigenden Einfluß der im Rohrinnenraum enthaltenen Medien durch eine innere Folienauskleidung zu schützen, die mittels an der Folie angeordneter, hinterschnittener Vorsprünge im Beton verankert ist. Die Vorsprünge haben beispielsweise die Form von im Querschnitt T-förmigen Leisten oder Noppen, die in einem gegenseitigen Abstand von etwa 5-15 cm angeordnet sind (DE-A-28 51 399). — Es ist auch bekannt, die Leisten durch Streifen von bürstenartig dicht angeordneten, kleinen Vorsprüngen zu ersetzen (DE-A-24 32 648), die in einem Gewebestreifen verankert sind, der seinerseits mit der Folie verbunden ist, wobei die Zwischenräume zwischen benachbarten Streifen eine Breite von 5-20 cm haben. Die Zwischenräume wurden bislang deshalb für erforderlich gehalten, weil evtl. von der Außenseite durch Poren oder Öffnungen des Betonrohrs einwirkendem Überdruck Gelegenheit zur Entspannung gegeben werden muß. Das Druckmedium kann in den verankerungsfreien Bereichen die Folie von der Oberfläche des Betonrohrs abheben und zu einer Entspannungsstelle abfließen, die sich beispielsweise bei Abwasserrohren im auskleidungsfreien, unteren Bereich derselben befindet. Die Entspannung vermeidet dabei die Entstehung eines wesentlichen äußeren Überdrucks an der Folie. Für Einsatzfälle, in denen der äußere Überdruck an der Folie nicht entspannt wird, also für druckfeste Auskleidungen, haben sich die bekannten Verankerungsformen nicht bewährt. Das liegt nicht etwa daran, daß die Verankerungsstärke der Vorsprünge nicht ausreichen würde, sondern daran, daß sich in den verankerungsfreien Bereichen zwischen benachbarten Verankerungsvorsprüngen bzw. benachbarten Streifen von kleinen Verankerungsvorsprüngen eine nach innen gerichtete Folienausbeulung bildet, die an ihrem Rand scharf begrenzt wird von den Verankerungsvorsprüngen bzw. -streifen, so daß an dieser Stelle eine scharfe Biegkante entsteht, an welcher Dauerschäden selbst bei Material hoher Dehnfähigkeit nicht ausgeschlossen werden können. — Schließlich ist es auch bekannt, eine Kunststoffolie zur Auskleidung einer Betonwand mit einem feinen Flor aus Kunst- oder Naturfasern zu versehen, die sich mit dem frischen Mörtel formschlüssig verbinden sollen (US-A-3 451 884). Die Fasern werden auf die extrusionsplastische Folie aufgeflockt und sollen mit ihr dabei verkleben. Jedoch gibt es Folienwerkstoffe, beispielsweise Polyäthylen, mit denen sich auf diese Weise keine hinreichende Haftfestigkeit erzielen läßt. — Die Erfindung bezieht sich daher auf diejenigen bekannten Betonrohre, bei denen die von Monofilamenten gebildeten Vorsprünge in Gewebestreifen enthalten sind, die ihrerseits mit der Folie verbunden sind.

Der Erfindung liegt die Aufgabe zugrunde, ein Betonrohr dieser bekannten Art so weiterzubilden, daß die Folienauskleidung außendruckfest ist.

Die erfindungsgemäße Lösung besteht darin, daß der mittlere Abstand der im Gewebestreifen und an der Stoßstelle zwischen zwei benachbarten Gewebestreifen einander nächstbenachbarten Vorsprünge im Mittel nicht größer als etwa die dreifache Foliendicke ist und daß der Elastizitätsmodul der Monofilamente größer ist als der der Folie.

Durch die Erfindung wird die Beulenbildung nicht nur in Anzahl und Stärke verringert, sondern vor allem erhält sie eine gänzlich andere Charakteristik. Die geringere Dehnbarkeit der Vorsprünge in Verbindung mit ihrer nahen Anordnung verhindert nämlich die Entstehung ausgeprägter Beulkanten, wobei diese weniger schädlich sind, weil dem Folienmaterial infolge der dichten Anordnung der Vorsprünge und deren geringerer Dehnbarkeit, eine entsprechend größere Dehnbarkeit zugestanden werden kann, durch die die Gefahr von Spannungsrissen im Bereich der Beulkanten ausgeschlossen wird.

Erfindungsgemäß entscheidend ist somit neben der dichten Anordnung der Verankerungsvorsprünge das Verhältnis der Dehnbarkeit der Vorsprünge und der Folie zueinander.

Zweckmäßigerweise sind die Ränder der Auskleidungsfolie im Bereich des Rohrrandes formschlüssig gegenüber von außen einwirkenden Kräften gehalten.

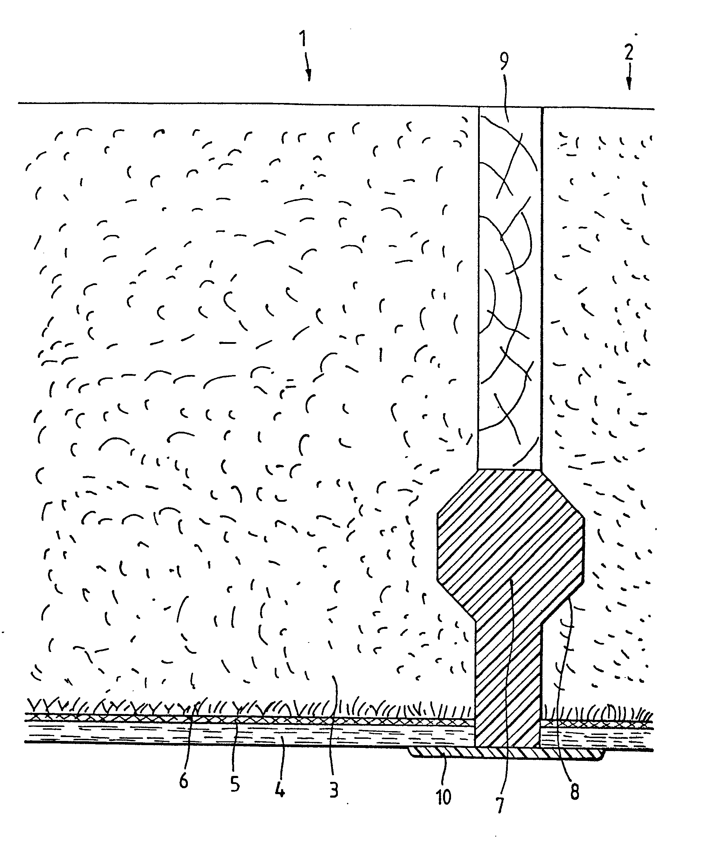

Die Erfindung wird im folgenden näher unter Bezugnahme auf die Zeichnung erläutert, die ein vorteilhaftes Ausführungsbeispiel in einer Figur veranschaulicht.

Dargestellt ist ein Teillängsschnitt durch die Wand eines Betonrohrs, wie es beispielsweise für größe Abwassersammler verwendet wird, und zwar im Bereich des Stoßes zwischen zwei axial benachbarten Rohrstücken 1 und 2. Die Rohre bestehen aus der Betonwand 3 und einer inneren Auskleidungsfolie 4, die beispielsweise aus Polyäthylen oder Polypropylen oder dergleichen besteht. Auf ihrer Außenseite ist die Folie 4 fest verbunden (beispielsweise verschweißt) mit einer Schicht eines Gewebes 5, in welcher bürstenartig die Vorsprünge 6 verankert sind. Die Gewebeschicht 5 wird von einer Vielzahl von Gewebestreifen gebildet, die in geringem Abstand voneinander mit der Folie 4 schubfest, damit Schubspannungen aus der einen Schicht in die andere übertragen werden können, verbunden sind und die in Umfangsrichtung oder schraubenförmig einander dicht benachbart gewickelt sind. Das Gewebe besteht zweckmäßigerweise aus einem Material mit höherem Elastizitätsmodul als das Material der Folie 4, wobei ferner darauf geachtet werden muß, daß es derart gespannt mit der Folie 4 verbunden wird, daß das Gewebe keine Lose enthält, die eine gewisse Anfangsdehnung ohne wesentliche Spannungsübernahme ermöglichen würde. Insbesondere soll das Gewebe in Umfangsrichtung keine Lose aufweisen, d. h. die in Umfangsrichtung verlaufenden Fäden (im allgemeinen Kettfäden) sollen im wesentlichen gestreckt sein, während bei den in Axialrichtung des Rohrs verlaufenden Fäden (Schußfäden) ein stärkerer Höhenwechsel entsprechend dem wechselnden Verlauf über und unter den Kettfäden zugelassen werden kann. Dadurch soll erreicht werden, daß insbesondere in Umfangsrichtung bei einer zur Rohrinnenseite hin konkaven Biegung der Folie und des Gewebes das letztere sofort Zugspannungen aufzunehmen in der Lage ist, bevor in der Folie sich irgendwie gefährliche Zugspannungen entwickeln können. Zweckmäßigerweise ist das Gewebe so stark dimensioniert, daß es im wesentlichen die gesamte Zugkraft aufnehmen und die Folie dadurch entlasten kann, insbesondere in Umfangsrichtung.

Die Vorsprünge 6 sind Monofilamente aus einem Material, das einen etwas höheren Elastizitätsmodul als die Folie 4 aufweist. Beispielsweise können die Monofilamente aus demselben Material wie die Folie bestehen, wobei sie aber durch Vorreckung einen höheren Elastizitätsmodul erhalten haben, der vorzugsweise mindestens doppelt so groß ist wie derjenige der Folie, vorzugsweise etwa 4 bis 10mal zu groß. Daß der Elastizitätsmodul der Verankerungsvorsprünge größer sein soll als derjenige der Folie, bedeutet nicht, daß die Dehnbarkeit der Vorsprünge besonders gering sein soll. Wie gesagt, kommt es vielmehr im Hinblick auf die besondere Beanspruchung der Folie an den Kanten etwaiger Beulen auf das Verhältnis der Dehnung der Vorsprünge und der Folie an.

Die die Vorsprünge bildenden Monofilamente sind innerhalb eines Gewebestreifens dicht angeordnet. Der mittlere Abstand der einander unmittelbar benachbarten Vorsprünge ist vorzugsweise kleiner als die doppelte, weiter vorzugsweise kleiner als die einfache Foliendicke. Unter den einander unmittelbar benachbarten Vorsprüngen sind diejenigen zu verstehen, die in derselben Reihe einander die nächsten sind oder die in benachbarten Reihen quer zur Reihenrichtung einander am nächsten benachbart sind. Der Maximalabstand zwischen zwei benachbarten Vorsprungsreihen soll nach der Erfindung nicht größer als die doppelte, vorzugsweise nicht größer als die einfache Foliendicke sein. Unter der Foliendicke ist die Dicke der eigentlichen Auskleidungsfolie 4 zuzüglich derjenigen Schichten zu verstehen, die an der Aufnahme der Biegekräfte im Falle einer Biegung der Folie beteiligt sind.

Die Auskleidung wird zweckmäßigerweise bei der Herstellung des Betonrohrs bereits vorgesehen, nämlich in der Weise, daß man die Betonwand 3 in Verbindung mit der in der vorgesehenen Gestalt gehaltenen Auskleidung formt und erstarren läßt. Beispielsweise kann die Auskleidung auf einen inneren Formkern aufgebracht werden. Wenn sie nicht bereits rohrförmig geschlossen ist, kann ihre Längsfuge nach dem Erhärten des Rohres durch Auftrag einer Schweißraupe geschlossen werden.

Gefährdet ist die Auskleidung vornehmlich im Bereich des Stoßes zweier axial hintereinander angeordneter Rohrstücke, weil an dieser Stelle die Einwirkung äußeren Überdrucks besonders stark ist und die Verankerung der Folie im Beton unterbrochen ist. Nach der Erfindung kann daher der Folienrand in diesem Bereich formschlüssig abgestützt werden mittels eines Kunststoffrings 7, der zweckmäßigerweise nach der Montage der Rohre 1 und 2 in deren Stoßfuge eingebracht wurde und insbesondere einen hinterschnitten ausgebildeten Teil 8 der Stoßfuge füllt und der auf der Innenseite mindestens bis zur Innenfläche der Auskleidungsfolien reicht. Nach außen hin wird er während des Einspritzens durch geeignete Sperrmittel begrenzt, die im dargestellten Beispiel von einem Holz 9 gebildet sind, das üblicherweise zwischen den Stirnflächen von gemeinsam im Schildvortrieb vorzuschiebenden Rohrstücken vorgesehen wird. Selbstverständlich können an die Stelle dieses Holzes aber auch irgendwelche anderen Begrenzungsmittel treten, die im einfachsten Fall von dem umgebenden Erdreich gebildet sind. Nach dem Erstarren des Kunststoffrings 7 wird dessen gegebenenfalls über die Innenfläche der Folie 4 hinausragender Teil abgearbeitet, damit er mit den Folien fluchtet. Anschließend kann mittels eines portablen Extruders ein Deckstreifen 10 aufgebracht werden, der sowohl mit der Oberfläche des Kunststoffrings 7 als auch mit der Innenfläche der benachbarten Ränder der Folien 4 verschweißt wird. Die Folienränder werden dadurch einerseits formschlüssig gegenüber von außen einwirkenden Druckkräften festgehalten und andererseits dicht miteinander verbunden.

Die die Vorsprünge haltenden Gewebestreifen sollen möglichst abstandsfrei nebeneinander angeordnet sein, damit vermieden wird, daß durch unnötigen Abstand der Streifen ein zu großer Abstand zwischen den an ihren Rändern befindlichen Vorsprüngen entsteht. Dieser Abstand soll im Nachbarschaftsbereich zweier Gewebestreifen bei einer Folie von 3 mm Dicke nicht größer als etwa 10 mm sein.

**Patentansprüche**

1. Betonrohr mit einer von einer Kunststoffolie (4) gebildeten, inneren Auskleidung, die mittels bürstenartig dicht angeordneter Vorsprünge (6) im Beton verankert ist, die von Monofilamenten gebildet sind, die in dichter Anordnung gehalten sind in Gewebestreifen (5), die ihrerseits mit der Folie (4) verbunden sind, dadurch gekennzeichnet, daß der mittlere Abstand der im Gewebestreiten (5) und an der Stoßstelle zwischen zwei benachbarten Gewebestreifen (5) einander nächstbenachbarten Vorsprünge (6) im Mittel nicht größer als etwa die dreifache Foliendicke ist und daß der Elastizitätsmodul der Monofilamente (6) größer ist als der der Folie (4).

2. Betonrohr nach Anspruch 1, dadurch gekennzeichnet, daß die in Rohrumfangsrichtung verlaufenden Ränder der Folie (4) an der Nahtstelle zwischen zwei benachbarten Rohrstücken (1, 2) mit einem zwischen den Rohrstirnflächen formschlüssig gehaltenen Ring (7) verschweißt sind.

## Claims

1. Concrete pipe having an inner lining, formed by a plastic film (4) and anchored in the concrete by means of projections (6) tightly arranged in a brush-like manner, the projections being formed by monofilaments which are held in a tight arrangement in strips of fabric (5), which in turn are bonded to the film (4), characterised in that the mean distance between projections (6) adjacent to one another in the fabric strip (5) and at the abutment between two adjacent fabric strips (5) is on average not greater than approximately three times the film thickness, and that the modulus of elasticity of the monofilaments (6) is greater than that of the film (4).

2. Concrete pipe according to Claim 1, characterised in that the edges of the film (4) which run in the circumferential pipe direction are welded, at the join between two adjacent pieces of pipe (1, 2), to a ring (7) which is positively held between the pipe end faces.

## Revendications

1. Tuyau en béton avec revêtement interne comportant une feuille mince de matière plastique (4) ancrée au béton par des excroissances (6) disposées à la manière des poils d'une brosse et constituées par des monofilaments, qui sont maintenus d'une façon assez serrée dans des bandes de tissu (5) reliées elles-mêmes à la feuille mince (4), caractérisé en ce que l'écartement moyen des excroissances (6) voisines l'une de l'autre dans les bandes de tissu (5) et à l'endroit d'un joint d'about entre les bandes de tissu (5) adjacentes, n'est pas supérieur en moyenne à environ le triple de l'épaisseur de la feuille mince, et en ce que le module d'élasticité des monofilaments (6) est supérieur à celui de la feuille mince (4).

2. Tuyau en béton conforme à la revendication 1, caractérisé en ce que les bords périphériques des feuilles minces (4), situés à l'endroit du joint soudé à réaliser entre deux sections adjacentes (1, 2) du tuyau, sont fixés par soudage à une couronne en matière plastique (7) retenue mécaniquement entre les faces frontales des tuyaux.